# EUROPÄISCHE PATENTSCHRIFT

(11) **EP 2 102 249 B1**
(45) Veröffentlichungstag und Bekanntmachung des Hinweises auf die Patenterteilung: **22.05.2013**
(21) Anmeldenummer: 07857376.3
(22) Anmeldetag: 11.12.2007
(51) Int. Cl.: C08F 2/28, C08F 220/44

(54) **FEINTEILIGE, KATIONISCHE POLYMERDISPERSIONEN**
FINE-PARTICLE, CATIONIC POLYMER DISPERSIONS
DISPERSIONS DE POLYMÈRES CATIONIQUES EN FINES PARTICULES

(30) Priorität: 14.12.2006 EP 06126099
(43) Veröffentlichungstag der Anmeldung: 23.09.2009
(73) Patentinhaber: BASF SE, 67056 Ludwigshafen (DE)
(72) Erfinder: BROCKMEYER, Andreas, 64404 Bickenbach (DE); LEMAN, Titus, Jakarta 120210 (ID); ETTL, Roland, 68005 Mannheim (DE)
(74) Vertreter: Peatfield, Jeremy William
(86) Internationale Anmeldenummer: PCT/EP2007/063684
(87) Internationale Veröffentlichungsnummer: WO 2008/071690

(56) Entgegenhaltungen:
- DE-A1- 2 454 397

## Beschreibung

Die Erfindung betrifft feinteilige, kationische Polymerdispersionen, die erhältlich sind durch Emulsionspolymerisation von ethylenisch ungesättigten Monomeren in einer wässrigen Lösung eines kationischen Vorpolymerisats als Dispergiermittel.

Aus der DE-A 24 54 397 ist ein Verfahren zur Herstellung kationischer wässriger Copolymerisat-Dispersionen durch Emulsionspolymerisation von olefinisch ungesättigten Monomeren in Gegenwart kationischer Dispergiermittel bekannt, wobei man in einer wässrigen Lösung bzw. Dispersion eines niedrigmolekularen Vorpolymerisats aus Styrol und/oder einem (Meth)Acrylsäureester und eines monoolefinisch ungesättigten Monomers, das tertiäre, protonierte tertiäre oder quaternäre Stickstoffatome aufweist, als kationischem Dispergiermittel ein Emulsionspolymerisat aus einem Acrylester, Styrol und/oder Acrylnitril und/oder Methacrylsäuremethylester und gegebenenfalls anderen Monomeren herstellt, das eine Glastemperatur von -15 bis +60°C hat. Die so erhältlichen Polymerdispersionen werden als Leimungsmittel für Papier verwendet.

Aus der EP-A 051 144 sind amphotere, feinteilige, wässrige Polymerdispersionen bekannt, die durch eine zweistufige Polymerisation hergestellt werden. In der ersten Stufe der Herstellung wird in einer Lösungscopolymerisation - das bevorzugte Lösemittel ist Eisessig - ein niedermolekulares, amphoteres Vorpolymerisat synthetisiert, das jeweils pro Mol eines stickstoffhaltigen Monomers, das eine Aminogruppe - und/oder eine quartäre Aminogruppe trägt, 0,5 Mol bis 1,5 Mol einer ethylenisch ungesättigten Carbonsäure einpolymerisiert enthält. Das Vorpolymerisat wird anschließend in Wasser dispergiert und in einer Emulsionspolymersiation mit nichtionischen, ethylenisch ungesättigten Monomeren unter Verwendung üblicher wasserlöslicher Initiatoren umgesetzt. Die erhaltenen Dispersionen werden als Masse- und Oberflächenleimungsmittel für Papier verwendet.

Aus der EP-B 257 412 sind Leimungsmittel für Papier auf Basis feinteiliger, wässriger Dispersionen von Copolymerisaten bekannt, die durch Copolymerisieren von Acrylnitril und/oder Methacrylnitril, eines Acrylsäureesters und gegebenenfalls anderen ethylenisch ungesättigten copolymerisierbaren Monomeren nach Art einer Emulsionspolymerisation in einer wässrigen Lösung einer abgebauten Stärke mit einer Viskosität ηᵢ von 0,12 bis 0,5 dl/g unter Verwendung von Wasserstoffperoxid oder Redoxinitiatoren erhältlich sind. Wie aus den Beispielen hervorgeht, wird die Stärke enzymatisch abgebaut. Der enzymatische Abbau der Stärke wird durch Zusatz von Essigsäure beendet.

Entsprechend aufgebaute Emulsionspolymerisate sind aus der EP-B 276 770 bekannt. Sie unterscheiden sich lediglich von den aus der EP-B 257 412 bekannten Leimungsmitteln darin, dass sie in einer wässrigen Lösung einer abgebauten Stärke mit einer Viskosität ηᵢ von 0,04 bis weniger als 0,12 dl/g hergestellt werden.

In der US 4,659,431 wird ein kationisches Leimungsmittel für Papier beschrieben, das in einem zweistufigen Verfahren hergestellt wird. Zunächst wird ein kationisches Lösungscopolymerisat hergestellt, welches anschließend als Emulgator in einer Emulsionspolymerisation eingesetzt wird. Das Lösungscopolymerisat wird dabei in einem Alkohol aus einer Monomermischung bestehend aus N,N-Dimethylaminoethylacrylat und/oder -methacrylat, Styrol und Acrylnitril synthetisiert. Nachfolgend werden mindestens 10% der N,N-Dimethylamino-Gruppen quarternisiert. In der zweiten Stufe erfolgt die Emulsionspolymerisation von Styrol, Acrylaten und/oder Methacrylaten und gegebenenfalls Acrylnitril unter Verwendung wasserlöslicher Initiatoren. Zudem werden teils zusätzlich zu dem kationischen Vorpolymerisat kationische und/oder nichtionische Emulgatoren zugesetzt.

Aus der EP-A 1 180 527 sind kationische, feinteilige, wässrige Polymerdispersionen bekannt, die als Masse- und Oberflächenleimungsmittel für Papier verwendet werden. Die Herstellung der Dispersion erfolgt ebenfalls in einem zweistufigen Verfahren, bei dem zunächst ein kationisches Lösungspolymerisat synthetisiert wird, welches anschließend in einer Emulsionspolymerisation als Emulgator fungiert. Die Emulsionspolymerisation wird unter Verwendung üblicher, wasserlöslicher Initiatoren, z. B. Peroxide zusammen mit Redox-Systemen, durchgeführt. Bei der Herstellung des Lösungspolymerisates werden keine einpolymerisierbaren Carbonsäuren wie Acrylsäure oder Methacrylsäure, verwendet, weil dies zu einer erhöhten Schaumneigung des Produktes bei der Oberflächenleimung des Papiers führen würde.

Der Erfindung liegt die Aufgabe zugrunde, weitere wässrige Polymerdispersionen zur Verfügung zu stellen, die als Leimungsmittel für Papier einsetzbar sind.

Die Aufgabe wird erfindungsgemäß gelöst mit feinteiligen, kationischen Polymerdispersionen, die erhältlich sind durch Emulsionspolymerisation von ethylenisch ungesättigten Monomeren in einer wässrigen Lösung eines kationischen Vorpolymerisats als Dispergiermittel, wenn zunächst das kationische Vorpolymerisat durch Polymerisieren von
(a) 10 bis 45 Gew.-% mindestens eines (Meth)acrylsäureesters, der eine Aminogruppe und/oder quartäre Ammoniumgruppe aufweist, und/oder mindestens eines (Meth)acrylamids, das eine Aminogruppe und/oder quartäre Ammoniumgruppe trägt,
(b) 40 bis 85 Gew.-% mindestens eines gegebenenfalls substituierten Styrols,
(c) 0 bis 20 Gew.-% Acrylnitril oder Methacrylnitril,
(d) 1 bis 15 Gew.-% mindestens einer ethylenisch ungesättigten Carbonsäure oder eines ethylenisch ungesättigten Carbonsäureanhydrids und
(e) 0 bis 20 Gew.-% mindestens eines von den Monomeren (b) und (c) verschiedenen, nichtionischen, ethylenisch ungesättigten Monomers,
wobei die Summe aus (a) + (b) + (c) + (d) + (e) = 100 Gew.-% ergibt, in einer Lösungspolymerisation in einem mit Wasser mischbaren organischen Lösemittel hergestellt und die Lösung des so hergestellten Vorpolymerisats mit Wasser verdünnt wird, und dass danach in der wässrigen Lösung des Vorpolymerisats eine Emulsionspolymerisation eines Monomergemisches aus
(i) 30 bis 80 Gew.-% Acrylnitril und/oder Methacrylnitril,
(ii) 5 bis 50 Gew.-% mindestens eines C₁- bis C₄-Alkylacrylates oder mindestens eines C₁- bis C₄-Alkylmethacrylates,
(iii) 5 bis 50 Gew.-% mindestens eines C₆- bis C₁₄-Alkylacrylates oder mindestens eines C₆- bis C₁₄-Alkylmethacrylates und
(iv) 0 bis 20 Gew.-% eines von den Monomeren (i), (ii) und (iii) verschiedenen nichtionischen Monomers,
wobei die Summe (i) + (ii) + (iii) + (iv) = 100 Gew.-% ergibt, in Gegenwart wasserlöslicher Polymerisationsinitiatoren durchgeführt wird. Die Menge der kationischen Monomeren (a), die in das Vorpolymerisat eingebaut wird, ist dabei immer höher als die Menge der anionischen Monomeren (d), damit das Vorpolymerisat kationisch ist.

Bevorzugt werden feinteilige, kationische Polymerdispersionen, worin das kationische Vorpolymerisat durch Polymerisieren von
(a) N,N-Dimethylaminopropylmethacrylamid und/oder N,N-Dimethylaminoethylmethacrylat und/oder N,N-Dimethylaminoethylacrylat,
(b) Styrol
   und
(d) Acrylsäure und/oder Methacrylsäure
oder durch Polymerisieren von
(a) N,N-Dimethylaminopropylmethacrylamid und/oder N,N-Dimethylaminoethylmethacrylat und/oder N,N-Dimethylaminoethylacrylat,
(b) Styrol,
(c) Acrylnitril und
(d) Acrylsäure und/oder Methacrylsäure
   erhältlich ist.

Zu den bevorzugt in Betracht kommenden feinteiligen, kationischen Polymerdispersionen gehören weiterhin Polymerdispersionen, bei denen das Emulsionspolymerisat durch Polymerisieren einer Monomermischung aus
(i) Acrylnitril,
(ii) n-Butylacrylat, Isobutylacrylat und/oder tert.-Butylacrylat und
(iii) Ethylhexylacrylat
erhältlich ist.

Besonders bevorzugt sind feinteilige, kationische Polymerdispersionen, worin das kationische Vorpolymerisat durch Polymerisieren von
(a) N,N-Dimethylaminopropylmethacrylamid und/oder N,N-Dimethylaminoethylmethacrylat und/oder N,N-Dimethylaminoethylacrylat,
(b) Styrol,
   und
(d) Acrylsäure
und das Emulsionspolymerisat durch Polymerisieren einer Monomermischung aus
(i) Acrylnitril,
(ii) n-Butylacrylat und/oder tert.-Butylacrylat und
(iii) Ethylhexylacrylat
erhältlich ist.

Das kationische Vorpolymerisat, das als Dispergiermittel für die Emulsionspolymerisation fungiert, wird in einer ersten Stufe der Polymerisation hergestellt. Es handelt sich hierbei um ein Lösungspolymerisat, das gegebenenfalls längere Zeit gelagert werden kann. Vorzugsweise verwendet man es unmittelbar nach seiner Herstellung in der zweiten Stufe der Polymerisation als Dispergiermittel.

Das kationische Vorpolymerisat ist erhältlich durch Polymerisieren der obengenannten Monomermischungen (a), (b), gegebenenfalls (c), (d) und gegebenenfalls (e) in Gegenwart mindestens eines Polymerisationsinitiators.

Als Monomere (a) setzt man mindestens einen (Meth)acrylsäureester ein, der eine Aminogruppe und/oder eine quartäre Ammoniumgruppe aufweist, und/oder mindestens ein (Meth)acrylamid, das eine Aminogruppe und/oder quartäre Ammoniumgruppe als Substituenten enthält. Hierbei handelt es sich um Monomere der allgemeinen Formel I 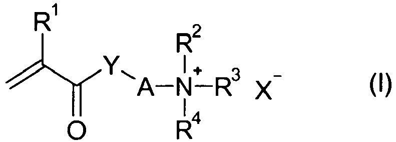 worin
R¹ Wasserstoff oder C₁-C₄-Alkyl, insbesondere Wasserstoff oder Methyl,
R², R³ unabhängig voneinander C₁-C₄-Alkyl, insbesondere Methyl, und
R⁴ Wasserstoff oderC₁-C₄-Alkyl, insbesondere Wasserstoff oder Methyl bedeuten,
Y für Sauerstoff, NH oder NR⁵ mit R⁵ = C₁-C₄-Alkyl steht,
A für C₂-C₈-Alkylen, z. B. 1,2-Ethandiyl, 1,2- oder 1,3-Propandiyl, 1,4-Butandiyl oder 2-Methyl-1,2-propandiyl, das gegebenenfalls durch 1, 2 oder 3 nicht benachbarte Sauerstoffatome unterbrochen ist, steht und
X- für ein Anionenäquivalent, z. B. für Cl-, HSO₄⁻, ½ SO₄²⁻ oder CH₃OSO₃⁻ etc. steht,
und für Y = H den freien Basen der Monomere der Formel I.

Beispiele für derartige Monomere sind 2-(N,N-Dimethylamino)ethylacrylat, 2-(N,N-Dimethylamino)ethylmethacrylat, 2-(N,N-Dimethylamino)ethylacrylamid, 3-(N,N-Dimethylamino)propylacrylamid, 3-(N,N-Dimethylamino)propylmethacrylamid, 2-(N,N-Dimethylamino)ethylmethacrylamid, 2-(N,N,N-Trimethylammonium)ethylacrylat-Chlorid, 2-(N,N,N-Trimethylammonium)ethylmethacrylat-Chlorid, 2-(N,N,N-Trimethylammonium)ethylmethacrylamid-Chlorid, 3-(N,N,N-Trimethylammonium)propylacrylamid-Chlorid, 3-(N,N,N-Trimethylammonium)propylmethacrylamid-Chlorid, 2-(N,N,N-Trimethylammonium)ethylacrylamid-Chlorid, sowie die entsprechenden Methosulfate und Sulfate.

Die Aminogruppen können gegebenenfalls ganz oder teilweise als Salz (Ammoniumgruppen) vorliegen. Die Monomeren (a) sind zu 10 bis 45 Gew.-%, vorzugsweise 15 bis 30 Gew.-% in der zu polymerisierenden Monomermischung enthalten.

Die Monomermischungen enthalten als Monomer (b) mindestens ein gegebenenfalls substituiertes Styrol beispielsweise Styrol, α-Methylstyrol, Ethylstyrol oder Vinyltoluol. Vorzugsweise verwendet man Styrol als Monomer (b). Die Monomeren (b) sind zu 40 bis 85 Gew.-%, vorzugsweise 55 bis 75 Gew.% in der Monomermischung enthalten.

Um das Vorpolymerisat zu modifizieren, können die Monomermischungen als Komponente (c) 0 bis 20 Gew.-%, vorzugsweise 5 bis 15 Gew.-% Acrylnitril oder Methacrylnitril enthalten.

Die Monomermischung enthält als Monomer (d) mindestens eine ethylenisch ungesättigte Carbonsäure oder eines ethylenisch ungesättigten Carbonsäureanhydrids wie Maleinsäureanhydrid oder Itaconsäureanhydrid. Als ethylenisch ungesättigte Carbonsäuren kommen beispielsweise C₃- bis C₆-Mono- und Dicarbonsäuren in Betracht, z. B. Acrylsäure, Methacrylsäure, Maleinsäure, Fumarsäure, Vinylessigsäure, Crotonsäure, Itaconsäure, Vinylmilchsäure sowie Monoester von ethylenisch ungesättigten Carbbonsäuren, beispielsweise Maleinsäuremonomethylester, Maleinsäuremonoethylester oder Maleinsäuremono-tert.-butylester. Vorzugsweise werden Acrylsäure und Methacrylsäure oder Mischungen dieser Säuren bei der Polymerisation eingesetzt. Die ethylenisch ungesättigen Carbonsäuren können auch in vollständig oder teilweise mit Basen neutralisierter Form zur Herstellung der Vorpolymerisate eingesetzt werden. Als Neutralisationsmittel kommen vorzugsweise Natronlauge, Kalilauge oder Ammoniak in Betracht. Die bei der Polymerisation eingesetzten Mengen an Monomeren (d) betragen 1 bis 15 Gew.-%, vorzugsweise 2 bis 10 Gew.-%, bezogen auf die Monomermischung. Da die Menge der kationischen Monomeren (a) die Menge der anionischen Monomeren (d) überwiegt, haben die entstehenden amphoteren Vorpolymerisate insgesamt immer eine kationische Ladung.

Die Monomermischung, die für die Herstellung des Vorpolymerisats eingesetzt wird, kann zur Modifizierung des Polymeren 0 bis 20 Gew.-%, meistens nur bis zu 10 Gew.-% mindestens eines von den Monomeren (b) und (c) verschiedenen, nichtionischen, ethylenisch ungesättigten Monomers (e) enthalten, beispielsweise Acrylamid, Methacrylamid, N-Methylolacrylamid und N-Methylolmethacrylamid.

Die für die Herstellung des Vorpolymerisats in Betracht kommenden Monomeren werden in einer Lösungspolymerisation in einem mit Wasser mischbaren organischen Lösemittel polymerisiert. Als Lösemittel verwendet man beispielsweise Ameisensäure, Essigsäure, Propionsäure, Alkohole wie Methanol, Ethanol, n-Propanol, Isopropanol, n-Butanol, Isobutanol, Cyclohexanol, n-Hexanol, Ethylenglykol, Propylenglykol, Diethylenglykol, Ketone wie Aceton oder Methylethylketon, Tetrahydrofuran, Dimethylformamid oder Mischungen der genannten Lösemittel. Die Lösemittel können bis zu 15 Gew.-% Wasser enthalten. Vorzugsweise werden jedoch weitgehend wasserfreie Lösemittel eingesetzt. Die Menge an Lösemittel wird meistens so gewählt, dass Polymerlösungen entstehen, die 20 bis 75 Gew.-%, vorzugsweise 40 bis 70 Gew.-% des Vorpolymerisats enthalten.

Die Vorpolymerisate haben beispielsweise mittlere Molmassen M_{w} bis zu 50 000, meistens Molmassen M_{w} in dem Bereich von 500 bis 20 000, vorzugsweise 1000 bis 15 000. Um die Molmassen der Vorpolymerisate zu regulieren, kann man bei der Polymerisation gegebenenfalls mindestens einen Polymerisationsregler verwenden wie Mercaptoethanol, Thioglykolsäure, Dodecylmercaptan oder Tetrabrommethan. Außerdem kann die Molmasse der Polymerisate mit Hilfe der Menge an verwendetem Polymerisationsinitiator eingestellt werden.

Die Polymerisation wird in Gegenwart mindestens eines Polymerisationsinitiators durchgeführt. Die Polymerisationstemperatur liegt beispielsweise in dem Bereich von 40 bis 150°C, vorzugsweise 50 bis 95°C. Als Initiatoren kann man beispielsweise Azostarter, Peroxide, Hydroperoxide, Wasserstoffperoxid oder Redoxkatalysatoren verwenden. Vorzugsweise setzt man bei der Herstellung des Vorpolymerisats als Initiatoren tert.-Butylperbenzoat, Benzoylperoxid, tert.-Butylperoxid und tert.-Butylperoctoat ein.

Die Lösung des kationischen Vorpolymerisats wird mit Wasser gemischt. Ein Gew.-Teil der Lösung des Vorpolymerisats wird beispielsweise mit 1 bis 50 Gew.-Teilen Wasser, vorzugsweise mit 1 bis 20 Gew.-Teilen Wasser gemischt. Falls gewünscht, kann man das organische Lösemittel, das für die Herstellung des Vorpolymerisats verwendet wurde, ganz oder teilweise aus der Polymerlösung vor oder nach dem Zusatz von Wasser aus der Polymerlösung entfernen, zweckmäßigerweise durch Abdestillieren unter vermindertem Druck.

In der wässrigen Lösung des Vorpolymerisats erfolgt in einer zweiten Polymerisationsstufe die Herstellung des Emulsionspolymerisats. Hierfür polymerisiert man ein Monomergemisch aus
(i) 30 bis 80 Gew.-% Acrylnitril und/oder Methacrylnitril,
(ii) 5 bis 50 Gew.-% mindestens eines C₁- bis C₄-Alkylacrylates oder mindestens eines C₁- bis C₄-Alkylmethacrylates,
(iii) 5 bis 50 Gew.-% mindestens eines C₆- bis C₁₄-Alkylacrylates oder mindestens eines C₆- bis C₁₄-Alkylmethacrylates und
(iv) 0 bis 20 Gew.-% eines von den Monomeren (i), (ii) und (iii) verschiedenen nichtionischen Monomers.

Das Monomergemisch enthält vorzugsweise
(i) 40 bis 70 Gew.-% Acrylnitril und/oder Methacrylnitril,
(ii) 10 bis 40 Gew.-% mindestens eines C₁- bis C₄-Alkyl(meth)acrylates,
(iii) 5 bis 20 Gew.-% mindestens eines C₆- bis C₁₄-Alkyl(meth)acrylates und
(iv) bis zu 10 Gew.-% Acrylamid und/oder Methacrylamid.

Monomere (ii) sind beispielsweise Methylacrylat, Ethylacrylat, n-Propylacrylat, Isopropylacrylat, n-Butylacrylat, sek.-Butylacrylat, Isobutylacrylat, tert.-Butylacrylat, Methylmethacrylat, Ethylmethacrylat, n-Propylmethacrylat, Isopropylmethacrylat, n-Butylmethacrylat, Isobutylmethacrylat und sek.-Butylmethacrylat. Aus dieser Gruppe von Monomeren setzt man vorzugsweise n-Butylacrylat und tert.-Butylacrylat ein.

Monomere der Gruppe der Gruppe (iii) sind beispielsweise Hexylacrylat, Cyclohexylacrylat, n-Octylacrylat, 2-Ethylhexylacrylat, Decylacrylat, Dodecylacrylat, Tetradecylacrylat, Hexylmethacrylat, Cyclohexylmethacrylat, n-Octylmethacrylat, 2-Ethylhexylmethacrylat, Dodecylmethacrylat und Tetradecylmethacrylat. Aus dieser Gruppe von Monomeren kommen insbesondere Ethylhexylacrylat und Ethylhexylmethacrylat in Betracht.

Als Monomere der Gruppe (iv) eignen sich beispielsweise Acrylamid, Methacrylamid, N-Methylolacrylamid, N-Methylolmethacrylamid, N-C₁- bis C₁₈-Alkylacrylamide, N-C₁- bis C₁₈-Alkylmethacrylamide, N-Vinylamide, C₁- bis C₁₈-Alkylvinylether, Hydroxyalkylester sowie Ester von monoethylenisch ungesättigten Mono- und Dicarbonsäuren mit C₂-C₄-Polyalkylenglykolen.

Zu den Monomeren der Gruppe (iv) zählen weiterhin die schon unter a) genannten monoethylenisch ungesättigte Monomere, die wenigstens eine kationische Gruppe und/oder wenigstens eine im wässrigen Medium protonierbare Aminogruppe, eine quartäre Ammoniumgruppe, eine protonierbare Iminogruppe oder eine quaternisierte Iminogruppe aufweisen.

Außerdem können vernetzend wirkende Monomere eingesetzt werden. Beispiele für solche Vernetzer sind Butandioldiacrylat, Butandioldimethacrylat, Hexandioldiacrylat, Hexandioldimethacrylat, Glykoldicarylat, Glykoldimethacrylat, Trimethylolpropantriacrylat, Trimethylolpropantrimethyacrylat, Pentaerythrittriacrylat, Pentaerythrittetraacrylat, Diacrylate und Dimethacrylate von alkoxylierten zweiwertigen Alkoholen, Divinylharnstoff und/oder konjugierte Diolefine wie Butadien oder Isopren.

Je nach Anwendungszweck können die Monomeren der Gruppe (iv) auch sogenannte funktionale Monomere umfassen, d.h. Monomere, die neben einer polymerisierbaren C=C-Doppelbindung auch noch eine reaktive funktionelle Gruppe aufweisen, beispielsweise eine Oxirangruppe, eine reaktive Carbonylgruppe, z.B. eine Acetoacetylgruppe, eine Isocyanat-Gruppe, eine N-Hydroxymethylgruppe, eine N-Alkoxymethylgruppe, eine Trialkylsilylgruppe, eine Trialkoxysilylgruppe oder eine sonstige, gegenüber Nucleophilen reaktive Gruppe.

Die Polymerisation der Monomeren (i), (ii), (iii) und gegebenenfalls (iv) erfolgt nach der Methode einer Emulsionspolymerisation, d.h. die zu polymerisierenden Monomeren liegen in der Polymerisationsmischung als wässrige Emulsion vor. Zum Stabilisieren der Monomeremulsionen verwendet man die oben beschriebenen kationischen Vorpolymerisate.

Die Monomeren können im Reaktor vor Beginn der Polymerisation vorgelegt werden oder unter Polymerisationsbedingungen in einer oder mehreren Portionen oder kontinuierlich zu der polymerisierenden Reaktionsmischung bzw. der wässrigen Mischung des kationischen Vorpolymerisats zugefügt werden. Beispielsweise kann man die Hauptmenge der Monomeren, insbesondere wenigstens 80% und besonders bevorzugt die Gesamtmenge im Polymerisationsgefäß zusammen mit dem Vorpolymerisat vorlegen und direkt anschließend die Polymerisation durch Zugabe eines Polymerisationsinitiators starten. Eine weitere Verfahrensvariante besteht darin, dass man zunächst einen Teil (z. B. 5 bis 25%) der Monomeren oder der Monomeremulsion und einen Teil des Vorpolymerisats im Polymerisationsreaktor vorlegt, die Polymerisation durch Zugabe eines Initiators startet und die verbliebene Menge an Monomeren bzw. Monomeremulsion und gegebenenfalls Vorpolymerisat dem Reaktor kontinuierlich oder portionsweise zuführt und die Polymerisation der Monomeren zu Ende führt. Der Polymerisationsinitiator kann bei dieser Verfahrensvariante beispielsweise teilweise oder vollständig im Reaktor vorgelegt oder separat von den verbliebenen Monomeren in den Reaktor dosiert werden.

Die für die Emulsionspolymerisation geeigneten Starter sind prinzipiell alle für eine Emulsionspolymerisation geeigneten und üblicherweise verwendeten Polymerisationsinitiatoren, die eine radikalische Polymerisation von ethylenisch ungesättigten Monomeren auslösen. Hierzu zählen beispielsweise Azoverbindungen wie 2,2'-Azobisisobutyronitril, 2,2'-Azobis(2-methylbutyronitril), 2,2'-Azobis[2-methyl-N-(2-hydroxyethyl)propionamid], 1,1'-Azobis(1-cyclohexancarbonitril), 2,2'-Azobis(2,4-dimethylvaleronitril), 2,2'-Azobis(N,N'-dimethylenisobutyramidin)dihydrochlorid, und 2,2'-Azobis(2-amidinopropan)dihydrochlorid, organische oder anorganische Peroxide wie Diacetylperoxid, Di-tert.-butylperoxid, Diamylperoxid, Dioctano-ylperoxid, Didecanoylperoxid, Dilauroylperoxid, Dibenzoylperoxid, Bis(o-toluyl)peroxid, Succinylperoxid, tert.-Butylperacetat, tert.-Butylpermaleinat, tert.-Butylperisobutyrat, tert.-Butylperpivalat, tert.-Butylperoctoat, tert.-Butylperneodecanoat, tert.-Butylperben-zoat, tert.-Butylperoxid, tert.-Butylhydroperoxid, Cumolhydroperoxid, tert.-Butylperoxi-2-ethylhexanoat und Diisopropylperoxidicarbamat, Salze der Peroxodischwefelsäure und Redox-I nitiatorsysteme.

Vorzugsweise setzt man zur Polymerisation ein Redoxinitiatorsystem ein, insbesondere ein Redoxinitiatorsystem, das als Oxidationsmittel ein Salz der Peroxodischwefelsäure, Wasserstoffperoxid oder ein organisches Peroxid wie tert.-Butylhydroperoxid enthält. Als Reduktionsmittel enthalten die Redoxinitiatorsysteme vorzugsweise eine Schwefelverbindung, die insbesondere ausgewählt ist unter Natriumhydrogensulfit, Natriumhydroxymethansulfinat und dem Hydrogensulfit-Addukt an Aceton. Weitere geeignete Reduktionsmittel sind phosphorhaltige Verbindungen wie phosphorige Säure, Hypophosphite und Phosphinate, sowie Hydrazin bzw. Hydrazinhydrat und Ascorbinsäure. Weiterhin können Redoxinitiatorsysteme einen Zusatz geringer Mengen von Redoxmetallsalzen wie Eisensalze, Vanadiumsalze, Kupfersalze, Chromsalze oder Mangansalze enthalten wie beispielsweise das Redoxinitiatorsystem Ascorbinsäure/Eisen(II)sulfat/Natriumperoxodisulfat. Besonders bevorzugte Redoxinitiatorsysteme sind Acetonbisulfit-Addukt/organisches Hydroperoxid wie tert-Butylhydroperoxid; Natriumdisulfit (Na₂S₂O₅)/organische Hydroperoxid wie tert-Butylhydroperoxid; Natriumhydroxymethansulfinat/organisches Hydroperoxid wie tert-Butylhydroperoxid; und Ascorbinsäure/Wasserstoffperoxid.

Üblicherweise setzt man den Initiator in einer Menge von 0,02 bis 2 Gew.-% und insbesondere 0,05 bis 1,5 Gew.-%, bezogen auf die Menge der Monomeren ein. Die optimale Menge an Initiator hängt naturgemäß von dem eingesetzten Initiatorsystem ab und kann vom Fachmann in Routineexperimenten ermittelt werden. Der Initiator kann teilweise oder vollständig im Reaktionsgefäß vorgelegt werden. Meistens wird ein Teil der Initiatormenge zusammen mit einem Teil der Monomeremulsion vorgelegt und der restliche Initiator kontinuierlich oder absatzweise zusammen mit den Monomeren, jedoch getrennt davon, zugegeben.

Druck und Temperatur sind für die Durchführung der Polymerisation der Monomeren von untergeordneter Bedeutung. Die Temperatur hängt naturgemäß vom eingesetzten Initiatorsystem ab. Die optimale Polymerisationstemperatur kann vom Fachmann mit Hilfe von Routineexperimenten ermittelt werden. Üblicherweise liegt die Polymerisationstemperatur im Bereich von 0 bis 110 °C, häufig im Bereich von 30 bis 95 °C. Die Polymerisation wird üblicherweise bei Normaldruck bzw. Umgebungsdruck durchgeführt. Sie kann aber auch bei erhöhtem Druck, z. B. bis 10 bar oder bei erniedrigtem Druck z. B. bei 20 bis 900 mbar, meistens jedoch bei > 800 mbar durchgeführt werden. Die Polymerisationsdauer beträgt vorzugsweise 1 bis 120 Minuten, insbesondere 2 bis 90 Minuten und besonders bevorzugt 3 bis 60 Minuten, wobei auch längere oder kürzere Polymerisationsdauern möglich sind.

Vorzugsweise polymerisiert man unter den sogenannten "starved conditions", d.h. Bedingungen, die möglichst nur eine geringe oder keine Bildung von leeren Mizellen erlauben. Hierzu setzt man entweder keine weitere oberflächenaktive Substanz oder nur so wenig weitere oberflächenaktive Substanz zu, so dass die wasserunlöslichen Monomerentröpfchen in der wässrigen Phase stabilisiert werden.

Falls man bei der Emulsionspolymerisation noch zusätzlich einen Dispersionsstabilisator zum Stabilisieren der entstehenden Emulsionspolymerisate zusetzt, dosiert man vorzugsweise mindestens eine oberflächenaktive Substanz in einer Menge von beispielsweise bis zu 5 Gew.-%, z. B. 0,1 bis 5 Gew.-%, bezogen auf die zu polymerisierenden Monomeren. Als oberflächenaktive Substanzen kommen neben den nichtionischen oberflächenaktiven Substanzen insbesondere auch anionische Emulgatoren, z. B. Alkylsulfate, Alkylsulfonate, Alkylarylsulfonate, Alkylethersulfate, Alkylarylethersulfate, anionische Stärke, Sulfosuccinate wie Sulfobernsteinsäurehalbester und Sulfobernsteinsäurediester und Alkyletherphosphate sowie weiterhin kationische Emulgatoren in Betracht.

Um die Eigenschaften der Polymeren zu modifizieren, kann man die Emulsionspolymerisation gegebenenfalls in Gegenwart mindestens eines Polymerisationsreglers durchführen. Beispiele für Polymerisationsregler sind organische Verbindungen, die Schwefel in gebundener Form enthalten wie Dodecylmercaptan, Thiodiglykol, Ethylthioethanol, Di-n-butylsulfid, Di-n-octylsulfid, Diphenylsulfid, Diisopropyldisulfid, 2-Mercaptoethanol, 1,3-Mercaptopropanol, 3-Mercaptopropan-1,2-diol, 1,4-Mercaptobutanol, Thioglykolsäure, 3-Mercaptopropionsäure, Mercaptobernsteinsäure, Thioessigsäure und Thioharnstoff, Aldehyde wie Formaldehyd, Acetaldehyd und Propionaldehyd, organische Säuren wie Ameisensäure, Natriumformiat oder Ammoniumformiat, Alkohole wie insbesondere Isopropanol sowie Phosphorverbindungen wie Natriumhypophosphit. Falls man bei der Polymerisation einen Regler einsetzt, so beträgt die jeweils verwendete Menge beispielsweise 0,01 bis 5, vorzugsweise 0,1 bis 1 Gew.-%, bezogen auf die bei der Polymerisation eingesetzten Monomeren. Polymerisationsregler und Vernetzer können bei der Polymerisation gemeinsam eingesetzt werden. Damit kann man beispielsweise die Rheologie der entstehenden Polymerdispersionen steuern.

Die Polymerisation wird in der Regel bei pH-Werten von 2 bis 9, vorzugsweise im schwach sauren Bereich bei pH-Werten von 3 bis 5,5 durchgeführt. Der pH-Wert kann vor oder während der Polymerisation mit üblichen Säuren wie Salzsäure, Schwefelsäure oder Essigsäure oder auch mit Basen wie Natronlauge, Kalilauge, Ammoniak; Ammoniumcarbonat, usw. auf den gewünschten Wert eingestellt werden. Bevorzugt wird die Dispersion nach Beendigung der Polymerisation mit Natronlauge, Kalilauge oder Ammoniak auf einen pH-Wert zwischen 5 und 7 eingestellt.

Um die restlichen Monomeren möglichst weitgehend aus der Polymerdispersion zu entfernen, führt man nach Abschluss der eigentlichen Polymerisation zweckmäßigerweise eine Nachpolymerisation durch. Hierfür setzt man der Polymerdispersion nach Beendigung der Hauptpolymerisation beispielsweise einen Initiator aus der Gruppe Wasserstoffperoxid, Peroxide, Hydroperoxide und/oder Azostarter zu. Die Kombination der Initiatoren mit geeigneten Reduktionsmitteln, wie beispielsweise Ascorbinsäure oder Natriumbisulfit, ist ebenfalls möglich. Bevorzugt werden öllösliche, in Wasser schwerlösliche Initiatoren verwendet, z. B. übliche organische Peroxide wie Dibenzoylperoxid, Di-tert.-Butylperoxid, tert.-Butylhydroperoxid, Cumylhydroperoxid oder Biscyclohexylperoxidicarbonat eingesetzt. Zur Nachpolymerisation wird das Reaktionsgemisch beispielsweise auf eine Temperatur erhitzt, die der Temperatur entspricht, bei der die Hauptpolymerisation durchgeführt wurde oder die um bis zu 20°C, vorzugsweise bis zu 10°C höher liegt. Die Hauptpolymerisation ist beendet, wenn der Polymerisationsinitiator verbraucht ist bzw. der Monomerumsatz beispielsweise mindestens 98%, vorzugsweise mindestens 99,5% beträgt. Zur Nachpolymerisation wird vorzugsweise tert.-Butylhydroperoxid eingesetzt. Die Polymerisation wird beispielsweise in einem Temperaturbereich von 40 bis 100°C, meistens 50 bis 95°C durchgeführt.

Die Polymerdispersionen enthalten dispergierte Teilchen mit einer mittleren Teilchengröße von beispielsweise 20 bis 500 nm, vorzugsweise 40 bis 150 nm. Die mittlere Teilchengröße kann durch dem Fachmann bekannte Methoden wie beispielsweise Laserkorrelationsspektroskopie, Ultrazentrifugation oder CHDF (Capillary Hydodynamic Fractionation) bestimmt werden. Ein weiteres Maß für die Teilchengröße der dispergierten Polymerteilchen ist der LD-Wert (Wert für die Lichtdurchlässigkeit). Zur Bestimmung des LD-Wertes wird die jeweils zu untersuchende Polymerdispersion in 0,1 gew.-%iger wässriger Verdünnung in einer Küvette mit einer Kantenlänge von 2,5 cm mit Licht der Wellenlänge 600 nm vermessen und mit der entsprechenden Durchlässigkeit von Wasser unter den gleichen Messbedingungen verglichen. Die Durchlässigkeit von Wasser wird dabei mit 100 % angegeben. Je feinteiliger die Dispersion ist, desto höher ist der LD-Wert, der nach der zuvor beschriebenen Methode gemessen wird. Aus den Messwerten kann die mittlere Teilchengröße errechnet werden, vgl. z. B. Verner, M. Bärta, B. Sedläcek, Tables of Scattering Functions for Spherical Particles, Prag, 1976, Edice Marco, Rada D-DATA, SVAZEK D-1.

Der Feststoffgehalt der Polymerdispersion beträgt beispielsweise 5 bis 50 Gew.-%, und liegt vorzugsweise in dem Bereich von 15 bis 40 Gew.-%.

Die kationischen Polymerdispersionen werden als Masse- und Oberflächenleimungsmittel für Papier, Pappe und Karton verwendet. Bevorzugt ist die Anwendung als Oberflächenleimungsmittel. Dabei können die erfindungsgemäßen Polymerdispersionen mit allen bei der Oberflächenleimung geeigneten Verfahrensmethoden verarbeitet werden. Für die Anwendung wird die Dispersion üblicherweise der Leimpressenflotte in einer Menge von 0,05 bis 5 Gew.-%, bezogen auf Festsubstanz, zugesetzt. Die Menge an Polymerdispersion richtet sich nach dem gewünschten Leimungsgrad der auszurüstenden Papiere oder Papierprodukte. Die Leimpressenflotte kann weitere Stoffe enthalten, wie z. B. Stärke, Pigmente, optische Aufheller, Biozide, Verfestiger für Papier, Fixiermittel, Entschäumer, Retentionsmittel und/oder Entwässerungsmittel. Die Leimungsmitteldispersion kann auf Papier, Pappe oder Karton mittels einer Leimpresse oder anderen Auftragsaggregaten wie Filmpresse, Speedsizer oder Gate-roll aufgebracht werden. Die Menge an Polymer, die so auf die Oberfläche von Papierprodukten aufgetragen wird, beträgt beispielsweise 0,005 bis 1,0 g/m², vorzugsweise 0,01 bis 0,5 g/m².

Die erfindungsgemäßen Polymerdispersionen können zur Herstellung sämtlicher Papiersorten verwendet werden, z. B. von Schreib- und Druckpapieren sowie Verpackungspapieren, insbesondere von Papieren für die Verpackung von Flüssigkeiten.

Die erfindungsgemäßen Polymerdispersionen zeigen bereits bei sehr geringer Dosierung eine exzellente Leimungswirkung auf allen Papieren, hergestellt mit unterschiedlichen Fasertypen von ungebleichtem Nadelholz, ungebleichtem Laubholz, ungebleichtem Hartholz, gebleichtem Nadelholz, gebleichtem Laubholz, gebleichtem Hartholz, Deinking-Fasern oder Mischungen aus verschiedenen Fasertypen. Weiterhin zeigen die erfindungsgemäßen Dispersionen eine sehr gute Verträglichkeit mit den üblichen Stärken, zum Beispiel Kartoffelstärke, Maisstärke, Weizenstärke, Tapiokastärke. Außerdem zeigen die erfindungsgemäßen Dispersionen eine vollständige Leimungsausbildung unmittelbar nach der Herstellung und Trocknung der Papierbahn.

Sofern aus dem Zusammenhang nichts anderes hervorgeht, bedeuten die Prozentangaben in den Beispielen immer Gewichtsprozent. Die Teilchengrößen wurden mittels eines High Performance Particle Sizer (HPPS) der Fa. Malvern unter Verwendung eines He-Ne-Lasers (633 nm) bei einem Streuwinkel von 173° bestimmt.

### Beispiel 1

In einem 2I-Planschliffkolben mit Rührer und Innentemperaturmessung wurden 101,4 g Eisessig vorgelegt und unter Stickstoffatmosphäre auf 105°C erhitzt. Unter Rühren wurde über einen Zeitraum von 45 min eine Mischung aus 133,0 g Styrol, 57,0 g N,N-Dimethylaminopropylmethacrylamid und 5,0 g Methacrylsäure gleichmäßig zudosiert. Zeitgleich mit dem Monomerzulauf wurde der Zulauf von 8,8 g tert.-Butylperoctoat in 18,3 g iso-Propanol gestartet, der innerhalb von 60 min zum Reaktionsgemisch zudosiert wurde. Nach Beendigung des Initiatorzulaufes wurde bei einer Temperatur von 105°C noch 30 min nachgerührt.

Die homogene Masse des Vorpolymerisats wurde anschließend bei 85°C innerhalb von 30 min mit 955 g vollentsalztem Wasser versetzt. Nach Zugabe von 1,5 g 10%iger Eisen(II)sulfatlösung wurden innerhalb von 30 min 20 g einer 5%igen Wasserstoffperoxidlösung zudosiert. Danach wurde bei 75°C eine Mischung aus 152,5 g Acrylnitril , 30,5 g Ethylhexylacrylat und 122,5 g n-Butylacrylat über einen Zeitraum von 120 min gleichmäßig zudosiert. Gleichzeitig mit dem Monomerzulauf wurde ein getrennter Zulauf von 80,0 g einer 5%igen Wasserstoffperoxidlösung über einen Zeitraum von 150 min zudosiert. Nach Ende der Zugabe wurde bei 85°C noch 60 min nachgerührt und das Reaktionsgemisch dann auf 50°C abgekühlt. Zur Nachaktivierung wurden 5 g eines Additionsproduktes von Natriumsulfit an Formaldehyd (Rongalit® C) zugegeben und nochmals 30 min bei 70°C nachgerührt.

Man erhielt eine feinteilige Polymerdispersion mit einem Feststoffgehalt von 30,1 % und einer mittleren Teilchengröße (Malvern) von 86 nm.

### Beispiel 2

In einem 2I-Planschliffkolben mit Rührer und Innentemperaturmessung wurden 116,4 g Eisessig vorgelegt und unter Stickstoffatmosphäre auf 105°C erhitzt. Unter Rühren wurde über einen Zeitraum von 45 min eine Mischung aus 161,55 g Styrol, 21,22 g n-Buthylacrylat, 64,84 g N,N-Dimethylaminopropylmethacrylamid und 5,89 g Acrylsäure gleichmäßig zudosiert. Zeitgleich mit dem Monomerzulauf wurde der Zulauf von 8,8 g tert.-Butylperoctoat in 18,3 g iso-Propanol gestartet, der innerhalb von 60 min zum Reaktionsgemisch zudosiert wurde. Nach Beendigung des Initiatorzulaufes wurde bei einer Temperatur von 105°C noch 30 min nachgerührt.

Die homogene Masse des Vorpolymerisats wurde anschließend bei 85°C innerhalb von 30 min mit 1078 g vollentsalztem Wasser versetzt. Nach Zugabe von 0,88 g 10%iger Eisen(II)sulfatlösung wurden innerhalb von 30 min 23,5 g einer 5%igen Wasserstoffperoxidlösung zudosiert. Danach wurde bei 85°C eine Mischung aus 167,98 g Acrylnitril, 33,6 g Ethylhexylacrylat und 134,4 g n-Butylacrylat über einen Zeitraum von 120 min gleichmäßig zudosiert. Gleichzeitig mit dem Monomerzulauf wurde ein getrennter Zulauf von 94,3 g einer 5%igen Wasserstoffperoxidlösung über 150 min zudosiert. Nach Ende der Zugabe wurde bei 85°C noch 60 min nachgerührt und das Reaktionsgemisch dann auf 50°C abgekühlt. Zur Nachaktivierung wurden 2 mal 2,65 g eines Additionsproduktes von Natriumsulfit an Formaldehyd (Rongalit® C) zugegeben und nochmals 30 min bei 70°C nachgerührt.

Man erhielt eine feinteilige Polymerdispersion mit einem Feststoffgehalt von 37,12% und einer mittleren Teilchengröße (Malvern) von 106 nm.

### Beispiel 3

In einem 2I-Planschliffkolben mit Rührer und Innentemperaturmessung wurden 101,4 g Eisessig vorgelegt und unter Stickstoffatmosphäre auf 105°C erhitzt. Unter Rühren wurde über einen Zeitraum von 45 min eine Mischung aus 133,0 g Styrol, 57,0 g N,N-Dimethylaminopropylmethacrylamid und 5,0 g Methacrylsäure gleichmäßig zudosiert. Zeitgleich mit dem Monomerzulauf wurde der Zulauf von 8,8 g tert.-Butylperoctoat in 18,3 g iso-Propanol gestartet, der innerhalb von 60 min zum Reaktionsgemisch zudosiert wurde. Nach Beendigung des Initiatorzulaufes wurde bei einer Temperatur von 105°C noch 30 min nachgerührt.

Die homogene Masse des Vorpolymerisats wurde anschließend bei 85°C innerhalb von 30 min mit 955 g vollentsalztem Wasser versetzt. Nach Zugabe von 1,5 g 10%iger Eisen(II)sulfatlösung wurden innerhalb von 30 min 20 g einer 5%igen Wasserstoffperoxidlösung zudosiert. Danach wurde bei 75°C eine Mischung aus 213,5 g Acrylnitril , 45,7 g Ethylhexylacrylat und 45,7 g n-Butylacrylat über einen Zeitraum von 120 min gleichmäßig zudosiert. Gleichzeitig mit dem Monomerzulauf wurde ein getrennter Zulauf von 80,0 g einer 5%igen Wasserstoffperoxidlösung über einen Zeitraum von 150 min zudosiert. Nach Ende der Zugabe wurde bei 85°C noch 60 min nachgerührt und das Reaktionsgemisch dann auf 50°C abgekühlt. Zur Nachaktivierung wurden 5 g eines Additionsprodukts von Natriumhydrogensulfit and Formaldehyd (Rongalit® C) zugegeben und nochmals 30 min bei 70°C nachgerührt.

Man erhielt eine feinteilige Polymerdispersion mit einem Feststoffgehalt von 27,8% und mittleren Teilchengröße (Malvern) von 71 nm.

### Beispiel 4

In einem 2I-Planschliffkolben mit Rührer und Innentemperaturmessung wurden 101,4 g Eisessig vorgelegt und unter Stickstoffatmosphäre auf 105°C erhitzt. Unter Rühren wurde über einen Zeitraum von 45 min eine Mischung aus 153,5 g Styrol, 65,75 g Dimethylaminoethylmethacrylat und 5,75 g Acrylsäure gleichmäßig zudosiert. Zeitgleich wurde mit dem Monomerzulauf der Zulauf von 8,8 g tert.-Butylperoctoat in 18,13 g iso-Propanol gestartet, der innerhalb von 60 min zum Reaktionsgemisch zudosiert wurde. Nach Beendigung des Initiatorzulaufes wurde bei einer Temperatur von 105°C noch 30 min nachgerührt.

Die homogene Masse des Vorpolymerisats wurde anschließend bei 85°C innerhalb von 30 min mit 955 g vollentsalztem Wasser versetzt. Nach Zugabe von 1,5 g 10%iger Eisen(II)sulfatlösung und 2,5 g Rongalit® C (Additionsprodukt von Natriumhydrogensulfit an Formaldehyd) wurden innerhalb von 30 min 20 g einer 5%igen Wasserstoffperoxidlösung zudosiert. Danach wurde bei 75°C eine Mischung aus 137,5 g Acrylnitril, 110,0 g n-Butylacrylat und 27,5 g Ethythexytacrytat über einen Zeitraum von 120 min gleichmäßig zudosiert. Gleichzeitig mit dem Monomerzulauf wurde ein getrennter Zulauf von 80,0 g einer 5%igen Wasserstoffperoxidlösung über 150 min zudosiert. Nach Ende der Zugabe wurde bei 75°C noch 60 min nachgerührt und das Reaktionsgemisch dann auf 50°C abgekühlt. Zur Nachaktivierung wurden 5 g Rongalit® C zugegeben und nochmals 30 min nachgerührt.

Man erhielt eine feinteilige Polymerdispersion mit einem Feststoffgehalt von 28,8% und einer mittleren Teilchengröße (Malvern) von 79 nm.

### Beispiel 5

In einem 2I-Planschliffkolben mit Rührer und Innentemperaturmessung wurden 101,4 g Eisessig vorgelegt und unter Stickstoffatmosphäre auf 105°C erhitzt. Unter Rühren wurde über einen Zeitraum von 45 min eine Mischung aus 110,50 g Styrol, 22,1 g Acrylnitril, 48,6 g N,N-Dimethylaminopropylmethacrylamid, 4,4 g Acrylsäure und 4.4 g n-Butylacrylat gleichmäßig zudosiert. Zeitgleich mit dem Monomerzulauf wurde der Zulauf von 8,8 g tert.-Butylperoctoat in 16.5 g iso-Propanol gestartet, der innerhalb von 60 min zum Reaktionsgemisch zudosiert wurde. Nach Beendigung des Initiatorzulaufes wurde bei einer Temperatur von 105°C noch 30 min nachgerührt.

Die homogene Masse der Vorpolymerisats wurde anschließend bei 85°C innerhalb von 30 min mit 975 g vollentsalztem Wasser versetzt. Nach Zugabe von 0,75 g 10%iger Eisen(II)sulfatlösung wurden innerhalb von 30 min 20 g einer 5 %igen Wasserstoffperoxidlösung zudosiert. Danach wurde bei 85°C eine Mischung aus 210,0 g Acrylnitril, 95,0 g t-Butylacrylat und 20 g Ethylhexylacrylat über einen Zeitraum von 120 min gleichmäßig zudosiert. Gleichzeitig mit dem Monomerzulauf wurde ein getrennter Zulauf von 80,0 g einer 5%igen Wasserstoffperoxidlösung über 150 min zudosiert. Nach Ende der Zugabe wurde bei 85°C noch 60 min nachgerührt und das Reaktionsgemisch dann auf 50°C abgekühlt. Zur Nachaktivierung wurden 11,3 g Rongalit® C zugegeben und nochmals 30 min bei 50°C nachgerührt.

Man erhielt eine feinteilige Polymerdispersion mit einem Feststoffgehalt von 30,2% und einer mittleren Teilchengröße (Malvern) von 67 nm.

### Beispiel 6

In einem 2I-Planschliffkolben mit Rührer und Innentemperaturmessung wurden 101,4 g Eisessig vorgelegt und unter Stickstoffatmosphäre auf 105°C erhitzt. Unter Rühren wurde über einen Zeitraum von 45 min eine Mischung aus 110,50 g Styrol, 22,1 g Acrylnitril, 48,6 g N,N-Dimethylaminoethylacrylat, 4,4 g Acrylsäure gleichmäßig zudosiert. Zeitgleich mit dem Monomerzulauf wurde der Zulauf von 8,8 g tert.-Butylperoctoat in 16,5 g iso-Propanol gestartet, der innerhalb von 60 min zum Reaktionsgemisch zudosiert wurde. Nach Beendigung des Initiatorzulaufes wurde bei einer Temperatur von 105°C noch 30 min nachgerührt.

Die homogene Masse der Vorpolymerisats wurde anschließend bei 85°C innerhalb von 30 min mit 975 g vollentsalztem Wasser versetzt. Nach Zugabe von 0,75 g 10%iger Eisen(II)sulfatlösung wurden innerhalb von 30 min 20 g einer 5 %igen Wasserstoffperoxidlösung zudosiert. Danach wurde bei 85°C eine Mischung aus 210,0 g Acrylnitril, 95,0 g t-Butylacrylat und 20 g Ethylhexylacrylat über einen Zeitraum von 120 min gleichmäßig zudosiert. Gleichzeitig mit dem Monomerzulauf wurde ein getrennter Zulauf von 80,0 g einer 5%igen Wasserstoffperoxidlösung über 150 min zudosiert. Nach Ende der Zugabe wurde bei 85°C noch 60 min nachgerührt und das Reaktionsgemisch dann auf 50°C abgekühlt. Zur Nachaktivierung wurden 11,3 g Rongalit® C zugegeben und nochmals 30 min bei 50°C nachgerührt.

Man erhielt eine feinteilige Polymerdispersion mit einem Feststoffgehalt von 30,1 % und einer mittleren Teilchengröße (Malvern) von 72 nm.

### Beispiel 7

In einem 2I-Planschliffkolben mit Rührer und Innentemperaturmessung wurden 101,4 g Eisessig vorgelegt und unter Stickstoffatmosphäre auf 105°C erhitzt. Unter Rühren wurde über einen Zeitraum von 45 min eine Mischung aus 110,50 g Styrol, 22,1 g Acrylnitril, 52,6 g N,N-Dimethylaminoethylmethacrylat, 4,4 g Acrylsäure gleichmäßig zudosiert. Zeitgleich mit dem Monomerzulauf wurde der Zulauf von 8,8 g tert.-Butylperoctoat in 16.5 g iso-Propanol gestartet, der innerhalb von 60 min zum Reaktionsgemisch zudosiert wurde. Nach Beendigung des Initiatorzulaufes wurde bei einer Temperatur von 105°C noch 30 min nachgerührt.

Die homogene Masse der Vorpolymerisats wurde anschließend bei 85°C innerhalb von 30 min mit 975 g vollentsalztem Wasser versetzt. Nach Zugabe von 0,75 g 10%iger Eisen(II)sulfatlösung wurden innerhalb von 30 min 20 g einer 5 %igen Wasserstoffperoxidlösung zudosiert. Danach wurde bei 85°C eine Mischung aus 210,0 g Acrylnitril, 95,0 g t-Butylacrylat und 20 g Ethylhexylacrylat über einen Zeitraum von 120 min gleichmäßig zudosiert. Gleichzeitig mit dem Monomerzulauf wurde ein getrennter Zulauf von 80,0 g einer 5%igen Wasserstoffperoxidlösung über 150 min zudosiert. Nach Ende der Zugabe wurde bei 85°C noch 60 min nachgerührt und das Reaktionsgemisch dann auf 50°C abgekühlt. Zur Nachaktivierung wurden 11,3 g Rongalit® C zugegeben und nochmals 30 min bei 50°C nachgerührt.

Man erhielt eine feinteilige Polymerdispersion mit einem Feststoffgehalt von 30,3% und einer mittleren Teilchengröße (Malvern) von 65 nm.

### Vergleichsbeispiel 1

In einem 2I-Planschliffkolben mit Rührer und Innentemperaturmessung wurden unter Stickstoffatmosphäre 60 g Eisessig, 60 g Styrol, 33 g N,N-Dimethylaminopropylmethacrylamid, 15 g Acrylsäure sowie 1 g Azobisisobutyronitril gemischt und unter Rühren auf 85°C erhitzt und bei dieser Temperatur weitere 30 min gerührt. Anschließend wurden bei gleicher Temperatur 1,25 g Azobisisobutyronitril gelöst in 5 g Aceton über einen Zeitraum von 60 min zudosiert. Nach beendeter Zugabe wurde nochmals 30 min bei 105°C nachpolymerisiert.

Die erhaltene homogene Lösung des Vorpolymerisats wurde anschließend bei 85°C mit 590 g vollentsalztem Wasser versetzt, wodurch eine homogene, leicht trübe Lösung erhalten wurde. Nach Zugabe von 20 g einer 6%igen Wasserstoffperoxidlösung sowie 1,2 g einer 10%igen Eisen(II)sulfatlösung wurden über einen Zeitraum von 120 min getrennt 80 g einer 6%igen Wasserstoffperoxidlösung sowie eine Mischung aus 66g Styrol und 126 g iso-Butylacrylat gleichmäßig unter Rühren bei einer Temperatur von 85°C zudosiert. Nach beendetem Zulauf wurde bei gleicher Temperatur noch 60 min nachpolymerisiert.

Man erhielt eine feinteilige Polymerdispersion mit einem Feststoffgehalt von 28,4% und einem LD-Wert (0,1 %) von 66%.

### Vergleichsbeispiel 2

In einem 2I-Planschliffkolben mit Rührer und Innentemperaturmessung wurde eine Mischung aus 105,4 g Styrol, 40,0 g N,N-Dimethylaminopropylmethacrylamid, 0,8 g tert-Dodecylmerkaptan (95%) und 117,8 g Eisessig bei Raumtemperatur vorgelegt und unter Stickstoffatmosphäre unter Rühren auf 95°C erhitzt. Nach Erreichen der Reaktionstemperatur wurde dann unter Rühren eine Lösung von 2,0 g Azobisisobutyronitril in 13,4 g Aceton über eine Dauer von 120 min. gleichmäßig zu der Reaktionslösung zudosiert. Der Ansatz wurde dann noch 120 min bei 95°C nachgerührt und anschließend abgekühlt.

Das Vorpolymerisat wurde bei Raumtemperatur unter Rühren mit 1260 g vollentsalztem Wasser versetzt. Die Mischung wurde unter Stickstoffatmosphäre und fortwährendem Rühren auf 85°C erhitzt. Man erhielt eine homogene, leicht trübe Flüssigphase. Nach Erreichen der Reaktionstemperatur wurde das Vorlagegemisch 15 min nachgerührt und anschließend mit 20,0 g einer 1 %igen Eisen(II)sulfatlösung versetzt. Danach wurde gleichzeitig mit konstanter Dosiergeschwindigkeit aus getrennten Zuläufen eine Mischung aus 129,5 g Styrol und 92,5 g n-Butylacrylat sowie 64,8g einer 3%igen Wasserstoffperoxid-Lösung über 90 min zum Reaktionsgemisch zudosiert, wobei die Temperatur konstant gehalten wurde. Nach Beendigung der Zuläufe wurde der Ansatz noch 15 min bei 85 °C nachgerührt und dann mit 2,3 g tert.-Butylhydroperoxid (70%) zur Nachaktivierung versetzt. Nach einer nochmaligen Nachrührzeit von 60 min bei 85°C wurde der Ansatz abgekühlt und bei Raumtemperatur mit einer wässrigen Lösung von Trilon® B versetzt.

Man erhielt eine feinteilige Polymerdispersion mit einem Feststoffgehalt von 19,7% und einem LD-Wert (0,1 %) von 66%.

### Anwendungstechnische Prüfung 1

Zur anwendungstechnischen Prüfung der Oberflächenleimungswirkung wurden die erfindungsgemäßen Dispersionen sowie die Vergleichsdispersionen mittels einer Laborleimpresse auf ein Prüfpapier (100% Altpapier, 80g/m² Flächenmasse, ungeleimt) aufgetragen. Eine oxidierte Kartoffelstärke (Emox® TSC) wurde durch Erhitzen auf 95°C in Wasser gelöst und dann auf die gewünschte Konzentration eingestellt. Zu der Stärkelösung wurden dann die zu prüfenden Dispersionen so dosiert, dass die Leimpressenflotte 80g/l einer oxidierten, gelösten Kartoffelstärke (Emox TSC) sowie 0,5 - 1,5 g/l der Dispersionen enthielt.

Die Leimungswirkung der Dispersionen aus Beispiel 1 -7 sowie den Vergleichsbeispielen 1 und 2 wurde anschließend durch Oberflächenapplikation auf das ungeleimte Prüfpapier ermittelt. Dazu wurde das Papier zweimal durch die Leimpresse geführt, wodurch im Mittel eine Zunahme des Gewichts von ca. 65% erreicht wurde.
Die Trocknung der oberflächengeleimten Papiere erfolgte auf einem Trockenzylinder bei 90°C. Anschließend wurden die Papiere über Nacht im Klimaraum aufbewahrt, bevor der Leimungsgrad bestimmt wurde.

### Cobb-Wert

Die Bestimmung des Leimungsgrades erfolgte nach Cobb gemäß DIN EN 20 535. Die Wasseraufnahme wird in g/m² angegeben.

Die Ergebnisse der Leimungsprüfung sind in Tabelle 1 angegeben.

**Tabelle 1**

| | Cobb60-Wert [g/m2] | | | Cobb120-Wert [g/m2] |
|---|---|---|---|---|
| Dosierung Dispersion fest in g/l | 0,5 | 1,0 | 1,5 | 1,0 |
| Beispiel 1 | 78 | 34 | 25 | 37 |
| Beispiel 2 | 46 | 25 | 23 | 34 |
| Beispiel 3 | 40 | 24 | 20 | 32 |
| Beispiel 4 | 51 | 25 | 22 | 36 |
| Beispiel 5 | 42 | 27 | 24 | 33 |
| Beispiel 6 | 45 | 26 | 23 | 34 |
| Beispiel 7 | 40 | 23 | 23 | 32 |
| Vergleichsbeispiel 1 | 83 | 27 | 26 | 53 |
| Vergleichsbeispiel 2 | 102 | 68 | 31 | 103 |

### Anwendungstechische Prüfung (Sofortleimung) 2

Zur anwendungstechnischen Prüfung auf Sofortleimungswirkung wurden die erfindungsgemäßen Dispersionen sowie die Vergleichsdispersionen mittels einer Laborleimpresse jeweils auf die Oberfläche eines Prüfpapiers (Mischung aus Kiefernsulfat, Birkensulfat und Eukalyptus, gebleicht, 80g/m² Flächenmasse, ungeleimt, 18% Asche) aufgetragen. Eine oxidierte Kartoffelstärke (Emox® TSC) wurde durch Erhitzen auf 95°C in Wasser gelöst und dann auf die gewünschte Konzentration eingestellt. Zu der Stärkelösung wurden dann die zu prüfenden Dispersionen so dosiert, dass die Leimpressenflotte 80g/l einer oxidierten, gelösten Kartoffelstärke (Emox TSC) sowie 0,8 - 2,4 g/l der Dispersionen enthielt.

Die Leimungswirkung der Dispersionen aus Beispiel 1 -7 sowie den Vergleichsbeispielen 1 und 2 wurde anschließend durch Oberflächenapplikation auf das ungeleimte Prüfpapier ermittelt. Dazu wurde das Papier einmal durch die Leimpresse geführt, wodurch im Mittel eine Zunahme des Gewichts von ca. 60% erreicht wurde.
Die Trocknung der oberflächengeleimten Papiere erfolgte auf einem Trockenzylinder bei 90°C. Ein Teil der Papiere wurde dann bei 120°C für 5 Minuten getrocknet, und der Leimungsgrad bestimmt (Sofort-Bestimmung, Cobb60-Wert). Der andere Teil der Papiere wurde über Nacht im Klimaraum aufbewahrt, bevor der Leimungsgrad bestimmt wurde.

### Cobb-Wert

Die Bestimmung des Leimungsgrades erfolgte nach Cobb60 gemäß DIN EN 20 535. Die Wasseraufnahme wird in g/m² angegeben.

Die Ergebnisse der Leimungsprüfung sind in der Tabelle 2 angegeben.

**Tabelle 2**

| | Cobb60-Wert [g/m2] (nach 24h Alterung) | | | Cobb60-Wert [g/m2] Sofort-Bestimmung |
|---|---|---|---|---|
| Dosierung Dispersion fest in g/l | 0,8 | 1,6 | 2,4 | 1,6 |
| Beispiel 1 | 64 | 38 | 25 | 39 |
| Beispiel 2 | 53 | 36 | 23 | 36 |
| Beispiel 3 | 58 | 33 | 23 | 34 |
| Beispiel 4 | 56 | 35 | 24 | 33 |
| Beispiel 5 | 62 | 39 | 25 | 38 |
| Beispiel 6 | 59 | 36 | 23 | 37 |
| Beispiel 7 | 56 | 35 | 24 | 37 |
| Vergleichsbeispiel 1 | 98 | 45 | 29 | 54 |
| Vergleichsbeispiel 2 | 112 | 56 | 31 | 62 |

## Patentansprüche

1. Feinteilige, kationische Polymerdispersionen, die erhältlich sind durch Emulsionspolymerisation von ethylenisch ungesättigten Monomeren in einer wässrigen Lösung eines kationischen Vorpolymerisats als Dispergiermittel, **dadurch gekennzeichnet, dass** zunächst das kationische Vorpolymerisat durch Polymerisieren von
(a) 10 bis 45 Gew.-% mindestens eines (Meth)acrylsäureesters, der eine Aminogruppe und/oder quartäre Ammoniumgruppe aufweist, und/oder eines (Meth)acrylamids, das eine Aminogruppe und/oder quartäre Ammoniumgruppe trägt,
(b) 40 bis 85 Gew.-% mindestens eines gegebenenfalls substituierten Styrols,
(c) 0 bis 20 Gew.-% Acrylnitril oder Methacrylnitril,
(d) 1 bis 15 Gew.-% mindestens einer ethylenisch ungesättigten Carbonsäure oder eines ethylenisch ungesättigten Carbonsäureanhydrids und
(e) 0 bis 20 Gew.-% mindestens eines von den Monomeren (b) und (c) verschiedenen, nichtionischen, ethylenisch ungesättigten Monomers,
wobei die Summe aus (a) + (b) + (c) + (d) + (e) = 100 Gew.-% ergibt,
in einer Lösungspolymerisation in einem mit Wasser mischbaren organischen Lösemittel hergestellt und die Lösung des so hergestellten Vorpolymerisats mit Wasser verdünnt wird, und dass danach in der wässrigen Lösung des Vorpolymerisats eine Emulsionspolymerisation eines Monomergemisches aus
(i) 30 bis 80 Gew.-% Acrylnitril und/oder Methacrylnitril,
(ii) 5 bis 50 Gew.-% mindestens eines C₁- bis C₄-Alkylacrylates oder mindestens eines C₁- bis C₄-Alkylmethacrylates,
(iii) 5 bis 50 Gew.-% mindestens eines C₆- bis C₁₄-Alkylacrylates oder mindestens eines C₆- bis C₁₄-Alkylmethacrylates und
(iv) 0 bis 20 Gew.-% eines von den Monomeren (i), (ii) und (iii) verschiedenen nichtionischen Monomers,
wobei die Summe (i) + (ii) + (iii) + (iv) = 100 Gew.-% ergibt, in Gegenwart wasserlöslicher Polymerisationsinitiatoren durchgeführt wird.

2. Feinteilige, kationische Polymerdispersionen nach Anspruch 1, **dadurch gekennzeichnet, dass** das kationische Vorpolymerisat durch Polymerisieren von
(a) N,N-Dimethylaminopropylmethacrylamid und/oder N,N-Dimethylaminoethylmethacrylat und/oder N,N-Dimethylaminoethylacrylat,
(b) Styrol, und
(d) Acrylsäure und/oder Methacrylsäure
erhältlich ist.

3. Feinteilige, kationische Polymerdispersionen nach Anspruch 1, **dadurch gekennzeichnet, dass** das kationische Vorpolymerisat durch Polymerisieren von
(a) N,N-Dimethylaminopropylmethacrylamid und/oder N,N-Dimethylaminoethylmethacrylat und/oder N,N-Dimethylaminoethylacrylat,
(b) Styrol
(c) Acrylnitril und
(d) Acrylsäure und/oder Methacrylsäure
erhältlich ist.

4. Feinteilige, kationische Polymerdispersionen nach einem der Ansprüche 1 bis 3, **dadurch gekennzeichnet, dass** das Emulsionspolymerisat durch Polymerisieren einer Monomermischung aus
(i) Acrylnitril,
(ii) n-Butylacrylat, Isobutylacrylat und/oder tert.-Butylacrylat und
(iii) Ethylhexylacrylat
erhältlich ist.

5. Verwendung der feinteiligen, kationischen Polymerdispersionen nach einem der Ansprüche 1 bis 4 als Masse und Oberflächenleimungsmittel für Papier, Pappe und Karton.

## Claims

1. A finely divided, cationic polymer dispersion which is obtainable by emulsion polymerization of ethylenically unsaturated monomers in an aqueous solution of a cationic prepolymer as a dispersant, wherein the cationic prepolymer is first prepared by polymerization of
(a) from 10 to 45% by weight of at least one (meth)acrylate which has an amino group and/or a quaternary ammonium group, and/or one (meth)acrylamide which carries an amino group and/or a quaternary ammonium group,
(b) from 40 to 85% by weight of at least one optionally substituted styrene,
(c) from 0 to 20% by weight of acrylonitrile or methacrylonitrile,
(d) from 1 to 15% by weight of at least one ethylenically unsaturated carboxylic acid or one ethylenically unsaturated carboxylic anhydride and
(e) from 0 to 20% by weight of at least one nonionic, ethylenically unsaturated monomer differing from the monomers (b) and (c),
the sum of (a) + (b) + (c) + (d) + (e) being 100% by weight,
in a solution polymerization in a water-miscible organic solvent, and the solution of prepolymer thus prepared is diluted with water, and wherein an emulsion polymerization of a monomer mixture comprising
(i) from 30 to 80% by weight of acrylonitrile and/or methacrylonitrile,
(ii) from 5 to 50% by weight of at least one C₁- to C₄-alkyl acrylate or at least one C₁- to C₄-alkyl methacrylate,
(iii)from 5 to 50% by weight of at least one C₆- to C₁₄-alkyl acrylate or at least one C₆- to C₁₄-alkyl methacrylate and
(iv) from 0 to 20% by weight of a nonionic monomer differing from the monomers (i), (ii) and (iii),
the sum (i) + (ii) + (iii) + (iv) being 100% by weight, is then carried out in the aqueous solution of the prepolymer in the presence of water-soluble polymerization initiators.

2. The finely divided, cationic polymer dispersion according to claim 1, wherein the cationic prepolymer is obtainable by polymerization of
(a) N,N-dimethylaminopropylmethacrylamide and/or N,N-dimethylaminoethyl methacrylate and/or N,N-dimethylaminoethyl acrylate,
(b) styrene and
(d) acrylic acid and/or methacrylic acid.

3. The finely divided, cationic polymer dispersion according to claim 1, wherein the cationic prepolymer is obtainable by polymerization of
(a) N,N-dimethylaminopropylmethacrylamide and/or N,N-dimethylaminoethyl methacrylate and/or N,N-dimethylaminoethyl acrylate,
(b) styrene,
(c) acrylonitrile and
(d) acrylic acid and/or methacrylic acid.

4. The finely divided, cationic polymer dispersion according to any of claims 1 to 3, wherein the emulsion polymer is obtainable by polymerization of a monomer mixture comprising
(i) acrylonitrile,
(ii) n-butyl acrylate, isobutyl acrylate and/or tert-butyl acrylate and
(iii) ethylhexyl acrylate.

5. The use of the finely divided, cationic polymer dispersion according to any of claims 1 to 4 as engine sizes and surface sizes for paper, board and cardboard.

## Revendications

1. Dispersions de polymères finement divisées, cationiques, qui peuvent être obtenues par polymérisation en émulsion de monomères éthyléniquement insaturés dans une solution aqueuse d'un prépolymère cationique comme dispersant, **caractérisées en ce qu'**on prépare d'abord le prépolymère cationique par polymérisation de
(a) 10 à 45% en poids d'au moins un ester de l'acide (méth)acrylique, qui présente un groupe amino et/ou un groupe ammonium quaternaire et/ou d'au moins un (méth)acrylamide, qui porte un groupe amino et/ou un groupe ammonium quaternaire,
(b) 40 à 85% en poids d'au moins un styrène le cas échéant substitué,
(c) 0 à 20% en poids d'acrylonitrile ou de méthacrylonitrile,
(d) 1 à 15% en poids d'au moins un acide carboxylique éthyléniquement insaturé ou d'au moins un anhydride d'acide carboxylique éthyléniquement insaturé et
(e) 0 à 20% en poids d'au moins un monomère éthyléniquement insaturé non ionique, différent des monomères (b) et (c),
la somme de (a) + (b) + (c) + (d) + (e) = 100% en poids,
dans une polymérisation en solution dans un solvant organique miscible à l'eau et on dilue la solution du prépolymère ainsi préparé avec de l'eau, et **en ce qu'**on réalise ensuite dans la solution aqueuse du prépolymère une polymérisation en émulsion d'un mélange de monomères, constitué par
(i) 30 à 80% en poids d'acrylonitrile et/ou de méthacrylonitrile,
(ii) 5 à 50% en poids d'au moins un acrylate de C₁-C₄-alkyle ou d'au moins un méthacrylate de C₁-C₄-alkyle,
(iii) 5 à 50% en poids d'au moins un acrylate de C₆-C₁₄-alkyle ou d'au moins un méthacrylate de C₆-C₁₄-alkyle et
(iv) 0 à 20% en poids d'un monomère non ionique différent des monomères (i), (ii) et (iii),
la somme de (i) + (ii) + (iii) + (iv) = 100% en poids, en présence d'initiateurs de polymérisation solubles dans l'eau.

2. Dispersions de polymère, finement divisées, cationiques selon la revendication 1, **caractérisées en ce que** le prépolymère cationique peut être obtenu par polymérisation
(a) de méthacrylamide de N,N-diméthylaminopropyle et/ou de méthacrylate de N,N-diméthylaminoéthyle et/ou d'acrylate de N,N-diméthylaminoéthyle,
(b) de styrène et
(d) d'acide acrylique et/ou d'acide méthacrylique.

3. Dispersions de polymères finement divisées, cationiques selon la revendication 1, **caractérisées en ce que** le prépolymère cationique peut être obtenu par polymérisation
(a) de méthacrylamide de N,N-diméthylaminopropyle et/ou de méthacrylate de N,N-diméthylaminoéthyle et/ou d'acrylate de N,N-diméthylaminoéthyle,
(b) de styrène
(c) d'acrylonitrile et
(d) d'acide acrylique et/ou d'acide méthacrylique.

4. Dispersions de polymères finement divisées, cationiques selon l'une quelconque des revendications 1 à 3, **caractérisées en ce que** le polymère en émulsion peut être obtenu par polymérisation d'un mélange de monomères constitué par
(i) de l'acrylonitrile,
(ii) de l'acrylate de n-butyle, de l'acrylate d'isobutyle et/ou de l'acrylate de tert-butyle et
(iii) de l'acrylate d'éthylhexyle.

5. Utilisation des dispersions de polymères finement divisées, cationiques selon l'une quelconque des revendications 1 à 4 comme masse et agent d'encollage surfacique pour le papier, le carton-pâte et le carton.
